(19) Europäisches Patentamt
European Patent Office
Office européen des brevets

(11) **EP 3 461 189 B1**

(12) **EUROPEAN PATENT SPECIFICATION**

(45) Date of publication and mention
of the grant of the patent:
**26.08.2020 Bulletin 2020/35**

(51) Int Cl.:
**H04W 56/00** (2009.01)

(21) Application number: **17812398.0**

(22) Date of filing: **15.02.2017**

(86) International application number:
**PCT/CN2017/073643**

(87) International publication number:
**WO 2017/215280 (21.12.2017 Gazette 2017/51)**

(54) **METHOD, BASE STATION AND SYSTEM FOR FREQUENCY SYNCHRONIZATION**

VERFAHREN, BASISSTATION UND SYSTEM ZUR FREQUENZSYNCHRONISIERUNG

PROCÉDÉ, STATION DE BASE ET SYSTÈME DE SYNCHRONISATION DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2016 PCT/CN2016/086272**

(43) Date of publication of application:
**27.03.2019 Bulletin 2019/13**

(73) Proprietor: **Huawei Technologies Co., Ltd.
Longgang District
Shenzhen, Guangdong 518129 (CN)**

(72) Inventors:
• **HU, Jun
Shenzhen
Guangdong 518129 (CN)**
• **CAO, Haibing
Shenzhen
Guangdong 518129 (CN)**

• **LUO, Yajun
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2010/091590     CN-A- 101 420 747
CN-A- 101 478 341     CN-A- 102 137 048
CN-A- 103 476 104

• **PARTH AMIN ET AL: "Network listening based
synchronization techniques for femtocell
systems", PERSONAL INDOOR AND MOBILE
RADIO COMMUNICATIONS (PIMRC), 2011 IEEE
22ND INTERNATIONAL SYMPOSIUM ON, IEEE,
11 September 2011 (2011-09-11), pages 1-5,
XP032102263, DOI: 10.1109/PIMRC.2011.6139863
ISBN: 978-1-4577-1346-0**

## Description

### TECHNICAL FIELD

The present invention relates to the field of communications technologies, and in particular, to a frequency synchronization method, a base station, and a system.

### BACKGROUND

Currently, in a communications system using a cellular network, phase synchronization between different base stations may be implemented by using an air interface synchronization technology. Usually, a period for adjusting a phase difference between the different base stations should not be too short when the air interface synchronization technology is used to implement the foregoing phase synchronization. In a time period between two successive adjustments, the phase difference between the different base stations may fluctuate rapidly with time. To prevent the phase difference between the different base stations from fluctuating rapidly with time, the phase synchronization between the different base stations needs to be maintained depending on a frequency synchronization manner based on a synchronous Ethernet.

WO 2010/091590 A1 describes a method and a device for implementing base-station clock synchronization, which belong to the field of communication and aim to achieve the effect of base-station clock synchronization with rapidness, high and reliable quality and low cost, independently from the clock synchronization network and the specific access in the prior art or the IP mode. The method comprises the following steps: acquiring a reference clock, measuring the clock deviations of signals among base stations in a crossed manner, acquiring the clock deviation of the signal clock of the base station relative to the reference clock, notifying the base station to adjust the working clock. The method is applied to the wireless communication system in need of clock synchronization.

Conference paper: "Network listening based synchronization techniques for femtocell systems", published on dating 11-09-2011, IEEE 22ND INTERNATIONAL SYMPOSIUM ON PERSONAL INDOOR AND MOBILE RADIO COMMUNICATIONS (PIMRC), 2011, discloses the following in the abstract: "Network Listening (NL) is a technique used for network synchronization where a base station (BS) is synchronized directly with another BS over-the-air, based on BS-BS measurements... We propose a novel User Equipment (UE) assisted NL to improve the local area network synchronization, in which, in addition to direct BS-BS measurements, UE helps the serving BS to synchronize with neighboring synchronized base stations (BSs)."

## SUMMARY

According to the present application, the above objects are solved by the claimed matter according to the independent claims. Embodiments of the present invention describe a frequency synchronization method, a base station, and a system, to implement frequency synchronization of base stations without depending on a synchronous Ethernet.

According to an aspect, an embodiment of the present invention provides a frequency synchronization method. The method includes: obtaining, by a first base station, a second frequency offset of a second base station; determining, by the first base station, a frequency difference between the first base station and the second base station; determining, by the first base station, a first frequency offset of the first base station based on the second frequency offset and the frequency difference; and performing, by the first base station, frequency synchronization based on the first frequency offset.

It can be learned from the foregoing description that the first base station can determine, through interaction between the first base station and the second base station, the first frequency offset of the first base station without depending on a synchronous Ethernet, to perform frequency synchronization.

In a possible design, the second base station may be a higher-level base station or a same-level base station of the first base station.

In a possible design, the first base station may obtain, within a measurement period, at least two phase difference measurement values between the first base station and the second base station, and determine the frequency difference between the first base station and the second base station based on the at least two phase difference measurement values. For example, the first base station may obtain, through fitting and based on the at least two phase difference measurement values and corresponding measurement moments, a linear function of the phase difference that is between the first base station and the second base station and that changes with time, to determine the frequency difference between the first base station and the second base station.

In a possible design, when the second base station is a same-level base station of the first base station, the first base station may alternatively send the first frequency offset to the second base station.

In a possible design, the first base station may alternatively send the first frequency offset to a third base station. For example, the third base station may be a lower-level base station of the first base station.

In a possible design, the first base station may alternatively obtain a second phase offset of the second base station, determine a phase difference between the first base station and the second base station, determine a first phase offset of the first base station based on the second phase offset and the phase difference, and perform phase synchronization based on the first phase offset. For example, for a moment, the first base station determines the phase difference between the first base station and the second base station based on the foregoing linear function.

In a possible design, when the second base station is a same-level base station of the first base station, the first base station may alternatively send the first phase offset to the second base station.

In a possible design, the first base station may alternatively send the first phase offset to a third base station. For example, the third base station may be a lower-level base station of the first base station.

In a possible design, before obtaining the second frequency offset of the second base station, the first base station may alternatively receive an association request from the second base station, and send an association response to the second base station.

According to another aspect, an embodiment of the present invention provides another frequency synchronization method. The method includes: performing, by a second base station, frequency synchronization, and sending, by the second base station, a second frequency offset of the second base station to a first base station, so that the first base station determines a first frequency offset of the first base station, where the first frequency offset is used by the first base station to perform frequency synchronization.

In a possible design, the second base station may alternatively send a second phase offset of the second base station to the first base station, so that the first base station determines a first phase offset of the first base station, where the first phase offset is used by the first base station to perform phase synchronization.

In a possible design, before performing the frequency synchronization, the second base station may alternatively send an association request to the first base station, and receive an association response from the first base station.

According to still another aspect, an embodiment of the present invention provides a base station. The base station is a first base station. The base station has a function of implementing behavior of the first base station in examples of the foregoing method. The function may be implemented by hardware, or may be implemented by hardware executing corresponding software. The hardware or software includes one or more modules corresponding to the foregoing function.

In a possible design, the base station includes a processor and a communications interface. The processor is configured to support the base station in performing a corresponding function in the foregoing method. The communications interface is configured to support the first base station in communicating with another base station, a network device in a core network, or the like. Further, the first base station may further include a transmitter and a receiver. The transmitter and the receiver are configured to support communication between the base station and a terminal. Further, the base station may further include a memory. The memory is coupled to the processor, and stores a program instruction and data necessary for the base station.

According to still another aspect, an embodiment of the present invention provides another base station. The base station is a second base station. The base station has a function of implementing behavior of the second base station in examples of the foregoing method. The function may be implemented by hardware, or may be implemented by hardware executing corresponding software. The hardware or software includes one or more modules corresponding to the foregoing function.

In a possible design, the base station includes a processor and a communications interface. The processor is configured to support the base station in performing a corresponding function in the foregoing method. The communications interface is configured to support the second base station in communicating with another base station, a network device in a core network, or the like. Further, the base station may further include a receiver and a transmitter. The receiver and the transmitter are configured to support communication between the base station and a terminal. Further, the base station may further include a memory. The memory is coupled to the processor, and stores a program instruction and data necessary for the base station.

According to still another aspect, an embodiment of the present invention provides a communications system. The system includes the first base station and the second base station according to the foregoing aspects.

According to yet another aspect, an embodiment of the present invention provides a computer storage medium, configured to store a computer software instruction used by the foregoing first base station, and including a program designed for executing the foregoing aspects.

According to yet another aspect, an embodiment of the present invention provides a computer storage medium, configured to store a computer software instruction used by the foregoing second base station, and including a program designed for executing the foregoing aspects.

Compared with the prior art, in solutions of the embodiments of the present invention, the first base station may obtain the second frequency offset of the second base station, determine the frequency difference between the first base station and the second base station, determine the first frequency offset of the first base station based on the second frequency offset and the frequency difference, and perform frequency synchronization based on the first frequency offset. Therefore, the first base station can determine, through interaction between the first base station and the second base station, the first frequency offset of the first base station without depending on a synchronous Ethernet, to perform frequency synchronization.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and a person of ordinary skill in the art can derive other drawings from the accompanying drawings without creative efforts.

FIG. 1A is a schematic diagram of a possible application scenario according to an embodiment of the present invention;
FIG. 1B is a schematic diagram of a network architecture of a possible cellular network;
FIG. 2 is a schematic diagram of a possible network architecture according to an embodiment of the present invention;
FIG. 3 is a schematic flowchart of a frequency synchronization method according to an embodiment of the present invention;
FIG. 4 is a schematic diagram of a method for determining a frequency difference according to an embodiment of the present invention;
FIG. 5A is a schematic diagram of a base station classification method according to an embodiment of the present invention;
FIG. 5B is a schematic diagram of another frequency synchronization method according to an embodiment of the present invention;
FIG. 5C is a schematic diagram of still another frequency synchronization method according to an embodiment of the present invention;
FIG. 5D is a schematic diagram of still another frequency synchronization method according to an embodiment of the present invention;
FIG. 5E is a schematic communication diagram of a base station association method according to an embodiment of the present invention;
FIG. 6 is a schematic block diagram of a base station according to an embodiment of the present invention;
FIG. 7 is a schematic block diagram of another base station according to an embodiment of the present invention;
FIG. 8 is a schematic structural diagram of a possible base station according to an embodiment of the present invention; and
FIG. 9 is a schematic structural diagram of a possible terminal according to an embodiment of the present invention.

## DESCRIPTION OF EMBODIMENTS

To make the objective, technical solutions, and advantages of the embodiments of the present invention clearer, the following describes the technical solutions of the embodiments of the present invention with reference to the accompanying drawings in the embodiments of the present invention.

Network architectures and service scenarios described in the embodiments of the present invention aim to more clearly describe the technical solutions in the embodiments of the present invention, but are not intended to limit the technical solutions provided in the embodiments of the present invention. A person of ordinary skill in the art may know that as the network architectures evolve and a new service scenario emerges, the technical solutions provided in the embodiments of the present invention are further applicable to a similar technical problem.

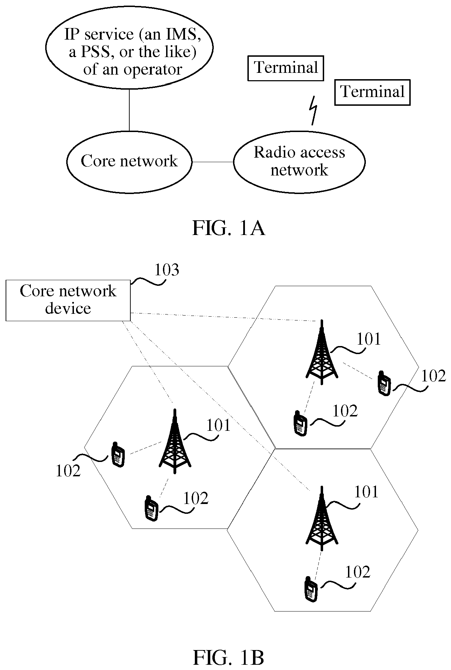

The following first describes some possible application scenarios and network architectures applicable to the embodiments of the present invention with reference to FIG. 1A to FIG. 2.

FIG. 1A shows an application scenario possibly applicable to the embodiments of the present invention. As shown in FIG. 1A, a terminal accesses an Internet Protocol (Internet Protocol, IP) service network, such as an IP multimedia subsystem (IP Multimedia Subsystem, IMS) network, or a packet-switched streaming service (Packet Switched Streaming Service, PSS for short) network, of an operator by using a radio access network (Radio Access Network, RAN) and a core network (Core Network, CN). The technical solutions described in the present invention are applicable to a Long Term Evolution (Long Term Evolution, LTE) system, or another wireless communications system using various radio access technologies, for example, a system using access technologies such as Code Division Multiple Access (Code Division Multiple Access, CDMA), Frequency Division Multiple Access (Frequency Division Multiple Access, FDMA), Time Division Multiple Access (Time Division Multiple Access, TDMA), Orthogonal Frequency Division Multiple Access (Orthogonal Frequency Division Multiple Access, OFDMA), and Single Carrier Frequency Division Multiple Access (Single Carrier Frequency Division Multiple Access, SC-FDMA). In addition, the technical solutions are also applicable to an evolved system subsequent to the LTE system, such as a 5th Generation (5th Generation, 5G) system. For clarity, the LTE system is merely used as an example for description. In the LTE system, an evolved universal terrestrial radio access network (Evolved Universal Terrestrial Radio Access Network, E-UTRAN) is used as a radio access network, and an evolved packet core (Evolved Packet Core, EPC) is used as a core network. The terminal accesses the IMS network by using the E-UTRAN and the EPC. It should be noted that when the solutions of the embodiments of the present invention are applied to a 5G system or another system that may appear in the future, names of a base station and the terminal may change. However, this does not affect implementations of the solutions of the embodiments of the present invention.

In the foregoing application scenario shown in FIG. 1A, the RAN may use a network architecture of a cellular network. FIG. 1B is a schematic diagram of a network architecture of a possible cellular network. As shown in FIG. 1B, the network architecture includes a base station 101, a terminal 102, and a core network device 103. The terminal 102 within a coverage range of the base station 101 may access the core network device 103 by using the base station 101. In FIG. 1B, a coverage range of the base station 101 is shown by a hexagon, and different coverage ranges of the base station are arranged in cellular shape. It may be understood that the network architecture shown in FIG. 1B is used as an example only, and does not constitute any limitation to actual architectural deployment of the cellular network.

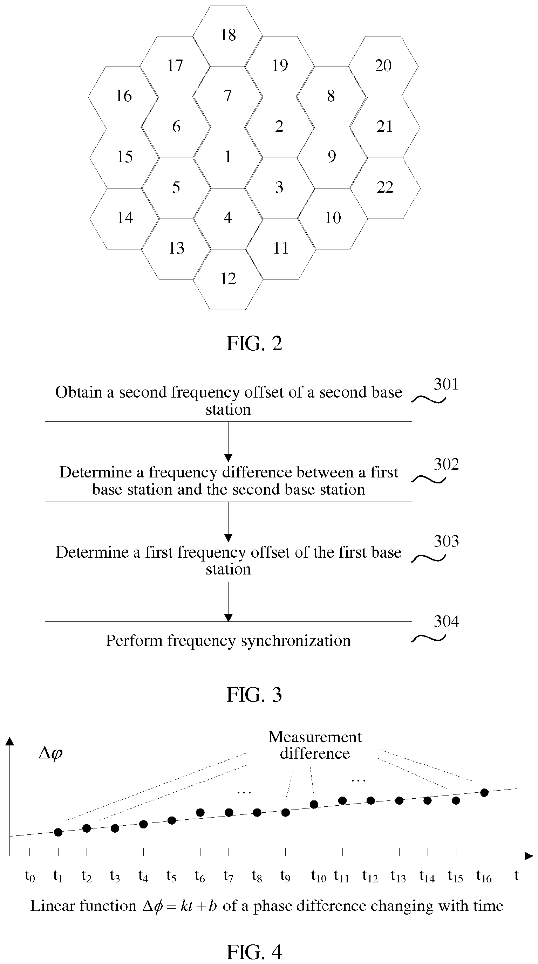

Based on the foregoing application scenario, FIG. 2 shows a possible network architecture according to an embodiment of the present invention. The network architecture includes a plurality of base stations, for example, base stations 1 to 22. Herein, the base stations 1 to 22 may be base stations in a same cluster. The base station 1 is a reference base station. Base stations (for example, the base stations 2 to 22) other than the base station 1 are non-reference base stations. For base stations in a same cluster, when a frequency and/or a phase of a base station thereof is used as a synchronization determining criterion, the base station is referred to as a reference base station, and a base station in the same cluster other than the reference base station is referred to as a non-reference base station. The reference base station may also be referred to as a synchronous base station, and the non-reference base station may also be referred to as a non-synchronous base station.

In a solution of this embodiment of the present invention, the non-reference base station may determine a frequency offset of the non-reference base station, and perform frequency synchronization based on the frequency offset. A frequency offset of a base station is an offset of a frequency of the base station compared with a frequency of the reference base station. When the base station is a reference base station, the frequency offset of the base station is zero. For example, the non-reference base station may determine a frequency difference between the non-reference base station and another base station, and then determine the frequency offset of the non-reference base station based on the frequency difference and a frequency offset of the another base station. A frequency difference is a difference between a frequency of a base station and a frequency of another base station.

Further, the non-reference base station may further determine a phase offset of the non-reference base station, and perform phase synchronization based on the phase offset. A phase offset of a base station is an offset of a phase of the base station compared with a phase of the reference base station. When the base station is a reference base station, the phase offset of the base station is zero. For example, the non-reference base station may determine a phase difference between the non-reference base station and another base station, and then determine the phase offset of the non-reference base station based on the phase difference and a phase offset of the another base station. A phase difference is a difference between a phase of a base station and a phase of another base station.

In the embodiments of the present invention, nouns "network" and "system" are often alternately used, but a person skilled in the art can understand meanings of the nouns. The terminals described in the embodiments of the present invention may include various handheld devices, in-vehicle devices, wearable devices, computing devices, or other processing devices connected to a wireless modem that have a wireless communication function, and various forms of user equipments (User Equipment, UE), mobile stations (Mobile Station, MS), terminal devices (terminal device), or the like. For convenience of description, the devices mentioned above are collectively referred to as terminals. The base station (Base Station, BS) described in the embodiments of the present invention is an apparatus that is disposed in a radio access network and that is configured to provide a wireless communication function for a terminal. The base station may include various forms of macro base stations, micro base stations, regeneration stations, access nodes, or the like. In systems using different radio access technologies, devices having a function of a base station may have different names. For example, in a Long Term Evolution (Long Term Evolution, LTE) system, such a device is referred to as an evolved NodeB (evolved NodeB, eNB or eNodeB), and in a 3G communications system, such a device is referred to as a Node B (Node B). For convenience of description, in the embodiments of the present invention, the apparatus for providing a wireless communication function for a terminal is collectively referred to as a base station or a BS.

The following further describes in detail the embodiments of the present invention based on the foregoing similarities of the embodiments of the present invention.

In an existing solution, when an air interface synchronization technology is used to implement phase synchronization between different base stations, the phase synchronization between the different base stations needs to be maintained depending on a frequency synchronization manner based on a synchronous Ethernet. However, in practice, many fixed transport networks providing backhaul for the cellular network are not synchronous Ethernets. Consequently, many application scenarios cannot be deployed.

In view of this, the embodiments of the present invention provide a frequency synchronization method, and a base station and system based on this method. The method includes: obtaining, by a first base station, a second frequency offset of a second base station; determining a frequency difference between the first base station and the second base station; then determining a first frequency offset of the first base station based on the second frequency offset and the frequency difference; and performing frequency synchronization based on the first frequency offset. The determining, by the first base station, a frequency difference between the first base station and the second base station may be, for example: obtaining, by the first base station within a measurement period, at least two phase difference measurement values between the first base station and the second base station, and determining the frequency difference between the first base station and the second base station based on the at least two phase difference measurement values. A phase difference measurement value is a measurement value obtained by measuring a phase difference between the first base station and the second base station at a moment within the measurement period. For convenience of description, the phase difference measurement value may be described below by using a measurement difference. It can be learned that in the solutions of the embodiments of the present invention, a frequency offset of a base station can be determined through interaction between the base station and another base station without depending on a synchronous Ethernet, to perform frequency synchronization.

The following describes the solutions provided in the embodiments of the present invention with reference to FIG. 3. FIG. 3 shows a frequency synchronization method according to an embodiment of the present invention.

In a part 301, a first base station obtains a second frequency offset of a second base station.

The first base station is a non-reference base station. The second base station may be a higher-level base station or a same-level base station of the first base station.

In an example, the second base station may be a reference base station. In this case, the second frequency offset is zero. Alternatively, the second base station may be a non-reference base station.

In an example, the first base station may further obtain a frequency offset of at least one other base station. For example, the first base station may further obtain a fourth frequency offset of a fourth base station.

In an example, the second base station may perform frequency synchronization, and send the second frequency offset of the second base station to the first base station. In a possible implementation, before performing frequency synchronization, the second base station may alternatively send an association request to the first base station. The first base station may send an association response to the second base station. The second base station and the first base station may be associated with a same synchronization region by using the association request and the association response.

In a part 302, the first base station determines a frequency difference between the first base station and the second base station.

In an example, the first base station may obtain, within a measurement period, at least two measurement differences between the first base station and the second base station, and determine the frequency difference between the first base station and the second base station based on the at least two measurement differences. For example, reference may be made to the following method shown in FIG. 4.

The first base station may obtain one of the at least two measurement differences in the following manner. First, a terminal sends a signal. For example, the signal may be a reference signal, a random access signal (for example, a preamble (preamble)), or another signal. Then, the first base station and the second base station each record a moment at which the signal is received. Finally, the second base station sends, to the first base station, the moment at which the second base station receives the signal, and the first base station determines a measurement difference between the first base station and the second base station based on the moment at which the second base station receives the signal and the moment at which the first base station receives the signal. Alternatively, the first base station may send, to the second base station, the moment at which the first base station receives the signal, and the second base station determines a measurement difference between the first base station and the second base station based on the moment at which the first base station receives the signal and the moment at which the second base station receives the signal, and then sends the measurement difference to the first base station.

After obtaining the foregoing at least two measurement differences within the measurement period, the first base station may obtain, through fitting, a linear function based on the at least two measurement differences and corresponding measurement moments, to determine the frequency difference between the first base station and the second base station. The linear function is a linear function of a phase difference that is between the first base station and the second base station and that changes with time.

In an example, when the first base station further obtains a frequency offset of at least one other base station, for example, when the first base station further obtains the fourth frequency offset of the fourth base station, the first base station may further determine a frequency difference between the first base station and the fourth base station.

It can be learned from the foregoing description that in this example, the first base station may determine the frequency difference between the first base station and the second base station based on air interface measurement of the terminal.

It should be noted that the part 301 and the part 302 are not performed in a limited order. For example, the part 301 may be performed first, and then the part 302 is performed. Alternatively, the part 302 may be performed first, and then the part 301 is performed. Alternatively, the part 301 and the part 302 may be performed at the same time.

In a part 303, the first base station determines a first frequency offset of the first base station based on the second frequency offset and the frequency difference between the first base station and the second base station.

In an example, the first base station may determine the first frequency offset based only on the second frequency offset and the frequency difference between the first base station and the second base station. For example, the first base station may determine the first frequency offset in the following manner. If the frequency difference is a frequency difference obtained by subtracting a frequency of the second base station from a frequency of the first base station, the first frequency offset = the second frequency offset + the frequency difference. Alternatively, if the frequency difference is a frequency difference obtained by subtracting a frequency of the first base station from a frequency of the second base station, the first frequency offset = the second frequency offset - the frequency difference.

In an example, the first base station may determine the first frequency offset based on the following factors: the second frequency offset, the frequency difference between the first base station and the second base station, the frequency offset of the fourth base station, and the frequency difference between the first base station and the fourth base station. For example, when a frequency difference between the first base station and a base station is obtained by subtracting a frequency of the base station from a frequency of the first base station, the first base station may determine the first frequency offset in the following manner. The first base station determines a candidate offset A of the first frequency offset, where the candidate offset A = the second frequency offset + the frequency difference between the first base station and the second base station. The first base station determines another candidate offset B of the first frequency offset, where the another candidate offset B = the fourth frequency offset + the frequency difference between the first base station and the fourth base station. The first base station averages the foregoing two candidate offsets to obtain the first frequency offset. It may be understood that, when the first base station obtains frequency offsets of a plurality of base stations, the first base station may correspondingly determine a plurality of candidate offsets in the foregoing manner. In this case, the first base station may average the plurality of candidate offsets to obtain the first frequency offset.

In an example, the first base station may alternatively send the first frequency offset to a third base station. In this case, the third base station may determine a frequency offset of the third base station based on the first frequency offset. For example, the third base station may be a lower-level base station of the first base station.

In an example, when the second base station is a same-level base station of the first base station, the first base station may alternatively send the first frequency offset to the second base station.

In a part 304, the first base station performs frequency synchronization based on the first frequency offset.

In an example, the first base station may perform frequency synchronization based on one first frequency offset. In this case, the first base station may perform frequency synchronization in a timely manner.

In an example, the first base station may perform frequency synchronization based on an average offset of at least two first frequency offsets. In this case, the first base station performs frequency synchronization for a relatively small quantity of times within a time period, and this has small impact on a service.

In the method shown in FIG. 3, the first base station may further perform phase synchronization. For example, the first base station may perform phase synchronization in the following manner. The first base station may obtain a second phase offset of the second base station, determine a phase difference between the first base station and the second base station, then determine a first phase offset of the first base station based on the second phase offset and the foregoing phase difference, and perform phase synchronization based on the first phase offset. Optionally, the first base station may alternatively send the first phase offset to the third base station. Optionally, when the second base station is a same-level base station of the first base station, the first base station may alternatively send the first phase offset to the second base station. Therefore, in the solution of this embodiment of the present invention, the first base station may perform, through interaction between the first base station and another base station, both frequency synchronization and phase synchronization without depending on a synchronous Ethernet.

It can be learned from the foregoing description that a frequency difference between different base stations may be determined in the solution of this embodiment of the present invention. For this, FIG. 4 shows a method for determining a frequency difference between different base stations according to an embodiment of the present invention. Using a first base station and a second base station as an example, the method shown in FIG. 4 may include the following parts.

In a part 401, the first base station obtains, within a measurement period, at least two measurement differences between the first base station and the second base station.

In an example, the measurement period is a moment t0 to a moment t16, the at least two measurement differences are 16 measurement differences, and the first base station obtains, within the measurement period, the 16 measurement differences that respectively correspond to the 16 moments: the moment t1, the moment t2, the moment t3, ..., the moment t15, and the moment t16. It may be understood that, alternatively, the measurement period may be a time period of any other length, and the at least two measurement differences may be another quantity of measurement differences.

In a part 402, the first base station determines a frequency difference between the first base station and the second base station based on the at least two measurement differences.

In an example, the first base station may obtain, through fitting and based on the at least two measurement differences (for example, the 16 measurement differences shown in FIG. 4) and the corresponding measurement moments, a linear function of a phase difference that is between the first base station and the second base station and that changes with time, to determine the frequency difference between the first base station and the second base station. For example, determining may be performed in the following manner.

The first base station determines a linear function:

$$\Delta\varphi = kt + b \quad (1)$$

The following explains the foregoing formula (1).

$t$ represents a time, $k$ represents a slope, $b$ represents a constant, and $\Delta\varphi$ represents the phase difference between the first base station and the second base station (for example, descriptions are provided by using an example in which the phase difference is a phase difference obtained by subtracting a phase of the second base station from a phase of the first base station), where

$$\Delta\varphi = \varphi_1 - \varphi_2 \quad (2)$$

$\varphi_1$ is the phase of the first base station, and $\varphi_2$ is the phase of the second base station. Based on a relationship between phases and frequencies, the phase of the first base station and the phase of the second base station may be respectively expressed as follows:

$$\varphi_1 = 2\pi f_1 t + a_1 \quad (3)$$

$$\varphi_2 = 2\pi f_2 t + a_2 \quad (4)$$

$f_1$ is a frequency of the first base station, $a_1$ is a phase constant of the first base station, $f_2$ is a frequency of the second base station, and $a_2$ is a phase constant of the second base station. Therefore, the following formula may be obtained by subtracting the phase of the second base station from the phase of the first base station:

$$\varphi_1 - \varphi_2 = 2\pi(f_1 - f_2)t + (a_1 - a_2) \quad (5)$$

The following formulas may be obtained in combination with the formulas (1), (2), and (5):

$$k = 2\pi(f_1 - f_2) \quad (6)$$

$$b = a_1 - a_2 \quad (7)$$

In addition, the frequency difference between the first base station and the second base station (for example, descriptions are provided by using an example in which the frequency difference is a frequency difference obtained by subtracting the frequency of the second base station from the frequency of the first base station) may be expressed as follows:

$$\Delta f = f_1 - f_2 \quad (8)$$

The following formula may be obtained in combination with the formulas (6) and (8):

$$k = 2\pi\Delta f \quad (9)$$

Therefore, it can be learned from the formula (9) that, the slope $k$ in the linear function (1) obtained through fitting is in direct proportion to the frequency difference $\Delta f$ between the first base station and the second base station. Therefore, the foregoing linear function (1) is obtained through fitting to obtain the slope $k$. Based on this, the frequency difference between the first base station and the second base station may be determined based on the following formula:

$$\Delta f = k / 2\pi \quad (10)$$

In an example, the first base station may further determine the phase difference between the first base station and the second base station. For example, based on the foregoing linear function (1) obtained through fitting, at a moment $t_x$, the phase difference between the first base station and the second base station is:

$$\Delta\varphi_x = kt_x + b \quad (11)$$

It should be noted that in the part 402, when the first base station obtains, through fitting, the foregoing linear function based on the at least two measurement differences, for example, when the first base station obtains, through fitting, the foregoing linear function based on the 16 measurement differences, some of the 16 measurement differences may be removed. For example, at a measurement moment (for example, the moment

$t_i$) of the 16 measurement moments, an error $x_i$ between the phase difference obtained by using the formula (1) and an actual measurement difference is determined, where $i$ is a positive integer less than or equal to 16. For example, calculation is performed based on the following formula:

$$x_i = \left| k\,t_i + b - \Delta\varphi_i^{'} \right| \quad (12)$$

where $\Delta\varphi_i'$ represents an actual measurement difference at a moment $t_i$, and "| |" represents calculating an absolute value.

Then, values of $x_i$ respectively corresponding to the 16 measurement moments are sorted in descending order, one or at least two measurement differences corresponding to a largest value of $x_i$ are removed. The remaining measurement differences are used to obtain, through fitting, the linear function of the phase difference that is between the first base station and the second base station and that changes with time.

By removing some measurement differences, the solution of this embodiment of the present invention can improve accuracy of the linear function, and therefore, can improve accuracy of a subsequently determined first frequency offset and/or first phase offset.

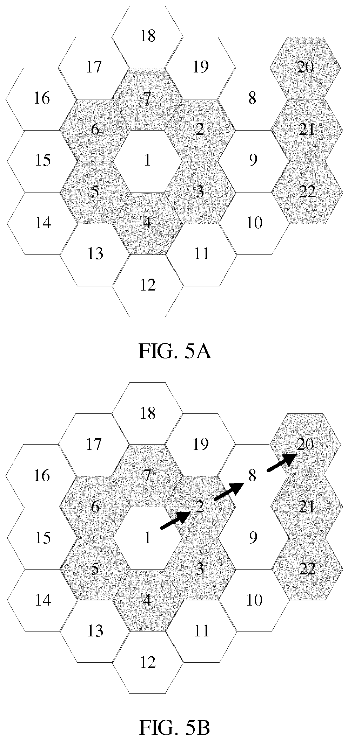

The following further describes the embodiments of the present invention with reference to FIG. 5A to FIG. 5D. It should be noted that in methods shown in FIG. 5A to FIG. 5D, for content the same as or similar to that in the method shown in FIG. 3 or FIG. 4, refer to detailed descriptions in FIG. 3 or FIG. 4. Details are not described herein again. In FIG. 5A to FIG. 5D, descriptions are provided by using an example in which a base station performs frequency synchronization based on a frequency offset of the base station.

Based on the network architecture of the cellular network shown in FIG. 2, FIG. 5A shows a base station classification method. The base station classification may be used for a non-reference base station, and a reference base station (that is, a base station 1) does not participate in the classification. Alternatively, the base station classification may be used for a reference base station and a non-reference base station, and a base station 1 is at an independent level. The following provides descriptions by using the latter case as an example.

As shown in FIG. 5A, the base stations 1 to 22 are base stations in a same cluster. The base station 1 belongs to a first level. The base stations 2 to 7 surrounding the first level and adjacent to the first level belong to a second level. The base stations 8 to 19 surrounding the second level and adjacent to the second level belong to a third level, and so on. Using a base station at the second level as an example, for the base station at the second level, a base station at the first level may be referred to as a higher-level base station, another base station at the second level may be referred to a same-level base station, and a base station at the third level may be referred to as a lower-level base station. This is also applicable to a base station at another level.

Based on the base station classification, FIG. 5B shows another frequency synchronization method according to an embodiment of the present invention. In FIG. 5B, a solution of the embodiments of the present invention is described by using the base station 1, the base station 2, the base station 8, and the base station 20 as an example. Based on this, the following describes the method shown in FIG. 5B.

In a part 501, the first-level base station 1 performs frequency synchronization.

In an example, the first-level base station 1 may perform frequency synchronization based on an IP clock synchronization technology. For example, the first-level base station 1 performs frequency synchronization with a reference base station in another base station cluster. The IP clock synchronization technology is a technology in which a server exists in a network and sends a broadcast clock frame to all reference base stations to perform synchronization. For example, the IP clock synchronization technology may include a 1588v2 synchronization technology. The 1588v2 synchronization technology is an IP-based clock synchronization technology complying with the 1588v2 standard of the Institute of Electrical and Electronics Engineers (Institute of Electrical and Electronics Engineers, IEEE).

It should be noted that the part 501 is an optional part.

In a part 502, the first-level base station 1 sends a first adjustment notification to the second-level base station 2, where the first adjustment notification is used to trigger the second-level base station 2 to perform frequency synchronization within a first time period.

In an example, the first adjustment notification carries a frequency offset of the first-level base station 1. For convenience of description, in the following descriptions, a frequency offset of a base station N may be described as a "frequency offset (N)", where N is a positive integer. For example, the frequency offset of the first-level base station 1 may be described as a frequency offset (1). It may be understood that, because the first-level base station 1 is a reference base station, the frequency offset (1) is zero.

In another example, the first-level base station 1 may further send the frequency offset (1) to the second-level base station 2 within the first time period.

In a part 503, the second-level base station 2 determines a frequency offset (2) and performs frequency synchronization within the first time period.

In an example, the second-level base station 2 may determine the frequency offset (2) by referring to the method in the part 303 in FIG. 3. Details are not described herein again.

In a part 504, the second-level base station 2 sends a second adjustment notification to the third-level base station 8, where the second adjustment notification is used to trigger the third-level base station 8 to perform frequency synchronization within a second time period.

In an example, the second adjustment notification carries the frequency offset (2) of the second-level base station 2.

In another example, the second-level base station 2 may further send the frequency offset (2) to the third-level base station 8 within the second time period.

In a part 505, the third-level base station 8 determines a frequency offset (8) and performs frequency synchronization within the second time period.

In an example, the third-level base station 8 may determine the frequency offset (8) by referring to the method in the part 303 in FIG. 3. Details are not described herein again.

In a part 506, the third-level base station 8 sends a third adjustment notification to the fourth-level base station 20, where the third adjustment notification is used to trigger the fourth-level base station 20 to perform frequency synchronization within a third time period.

In an example, the third adjustment notification carries the frequency offset (8) of the third-level base station 8.

In another example, the third-level base station 8 may further send the frequency offset (8) to the fourth-level base station 20 within the third time period.

In a part 507, the fourth-level base station 20 determines a frequency offset (20) and performs frequency synchronization within the third time period.

In an example, the fourth-level base station 20 may determine the frequency offset (20) by referring to the method in the part 303 in FIG. 3. Details are not described herein again.

Similarly, frequency synchronization may be performed on a fifth-level base station, a lower-level base station of the fifth-level base station, and the like with reference to the foregoing manner for the second-level base station 2, the third-level base station 8, or the fourth-level base station 20, until all the base stations in the cluster complete the frequency synchronization process. For an implementation process, refer to the foregoing similar descriptions. Details are not described again.

It can be learned from the method shown in FIG. 5B that, in this embodiment of the present invention, a non-reference base station may obtain a frequency offset of a higher-level base station, and determine a frequency offset of the non-reference base station based on the frequency offset of the higher-level base station, to perform frequency synchronization.

In the foregoing method, the frequency synchronization method performed for the second-level base station 2 may include only the part 502 and the part 503. The frequency synchronization method performed for the third-level base station 8 may include only the part 504 and the part 505. The frequency synchronization method performed for the fourth-level base station 20 may include only the part 506 and the part 507. It can be learned that, in the method shown in FIG. 5B, the frequency synchronization method performed by the second-level base station 2, the third-level base station 8, or the fourth-level base station 20 is similar to the method shown in FIG. 3. In addition, implementation details in the method shown in FIG. 5B and implementation details in the method shown in FIG. 3 may be cross-referenced.

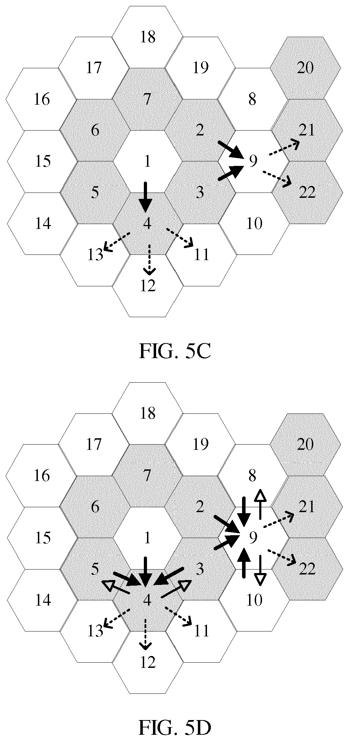

FIG. 5C shows still another frequency synchronization method according to an embodiment of the present invention. The method shown in FIG. 5C is similar to the method shown in FIG. 5B. For example, the frequency synchronization method performed by the second-level base station 4 is similar to the frequency synchronization method performed by the second-level base station 2 in the method shown in FIG. 5B. For this, refer to the descriptions in the part 502 and the part 503 in FIG. 5B. For another example, the frequency synchronization method performed by the third-level base station 9 is similar to the frequency synchronization method performed by the third-level base station 8 in the method shown in FIG. 5B. For this, refer to the descriptions in the part 504 and the part 505 in FIG. 5B. The following describes only differences between the method shown in FIG. 5C and the method shown in FIG. 5B.

In an example, a base station may obtain frequency offsets of at least two higher-level base stations. The base station determines a frequency offset of the base station based on the frequency offsets of the at least two higher-level base stations, and performs frequency synchronization.

The following provides descriptions by using a solution of determining a frequency offset (9) by the third-level base station 9 in FIG. 5C as an example. The third-level base station 9 obtains the frequency offset (2) of the second-level base station 2 and a frequency offset (3) of the second-level base station 3. Then, the third-level base station 9 determines a candidate offset C of the frequency offset (9) based on the frequency offset (2), and determines another candidate offset D of the frequency offset (9) based on the frequency offset (3). Finally, the third-level base station 9 averages the candidate offset C and the candidate offset D to obtain the frequency offset (9).

In an example, a base station may send a frequency offset of the base station to at least two lower-level base stations. For example, in FIG. 5C, the second-level base station 4 may send a frequency offset (4) to at least two of the third-level base station 11, the third-level base station 12, or the third-level base station 13. For another example, the third-level base station 9 may send the frequency offset (9) to the fourth-level base station 21 and the fourth-level base station 22.

It can be learned from the method shown in FIG. 5C, in this embodiment of the present invention, a non-reference base station may obtain frequency offsets of at least two higher-level base stations, so that the non-reference base station can determine a frequency offset of the non-reference base station more accurately, to perform frequency synchronization. Further, the non-reference base station may further send the frequency offset of the non-reference base station to at least two lower-level base stations.

FIG. 5D shows still another frequency synchronization method according to an embodiment of the present invention. The method shown in FIG. 5D is similar to the method shown in FIG. 5C. For detailed content, refer to the descriptions in FIG. 5C. The following describes only differences between the method shown in FIG. 5D and the method shown in FIG. 5C.

In an example, in addition to a frequency offset of a higher-level base station, a base station may further obtain a frequency offset of a same-level base station. The base station determines a frequency offset of the base station based on the frequency offset of the higher-level base station and the frequency offset of the same-level base station, and performs frequency synchronization.

The following provides descriptions by using a solution of determining the frequency offset (9) by the third-level base station 9 in FIG. 5D as an example. A solution of determining the frequency offset (4) by the second-level base station 4 in FIG. 5D may be implemented in a similar manner. Details are not described again.

In a possible implementation, the third-level base station 9 determines the frequency offset (9) in the second time period. The second time period may include a first time subperiod and a second time subperiod. First, the third-level base station 9 obtains the frequency offset (2) of the second-level base station 2 and the frequency offset (3) of the second-level base station 3 within the first time subperiod, determines a candidate offset E based on the frequency offset (2), determines a candidate offset F based on the frequency offset (3), and then averages the candidate offset E and the candidate offset F to obtain a candidate offset G. Second, the third-level base station 9 obtains the frequency offset (8) of the third-level base station 8 and a frequency offset (10) of the third-level base station 10 within the second time subperiod, determines a candidate offset H based on the frequency offset (8), and determines a candidate offset I based on the frequency offset (10). Finally, the third-level base station 9 averages the candidate offset G, the candidate offset H, and the candidate offset I to obtain the frequency offset (9).

In an example, a base station may further send, to a same-level base station, a candidate offset that is determined by the base station based on a frequency offset of a higher-level base station. For example, in FIG. 5D, the third-level base station 9 may send the candidate offset G to the third-level base station 8 and/or the third-level base station 10.

It can be learned from the method shown in FIG. 5D that, in this embodiment of the present invention, a non-reference base station may obtain a frequency offset of a higher-level base station and a frequency offset of a same-level base station, so that the non-reference base station can determine a frequency offset of the non-reference base station more accurately, to perform frequency synchronization.

An embodiment of the present invention further provides a base station association method, and a base station and system based on this method. The method includes: collecting, by a second base station, statistics about edge users between the second base station and an adjacent handover station, where the adjacent handover station includes a first base station; sending, by the second base station, a first association request to the first base station, where the first association request is used to associate the first base station and the second base station with each other as adjacent measurement base stations; sending, by the first base station, a first association response to the second base station; subsequently, sending, by the second base station, a second association request to the first base station, where the second association request is used to associate the first base station and the second base station with a same synchronization region; and sending, by the first base station, a second association response to the second base station.

According to the foregoing solution, the first base station and the second base station may be associated with the same synchronization region, and then separately perform frequency synchronization. For example, after implementing the foregoing base station association method, the first base station may then perform frequency synchronization by using the frequency synchronization methods described in FIG. 3 to FIG. 5D. Certainly, the first base station may alternatively perform frequency synchronization by using another frequency synchronization method. This is not limited in this embodiment of the present invention.

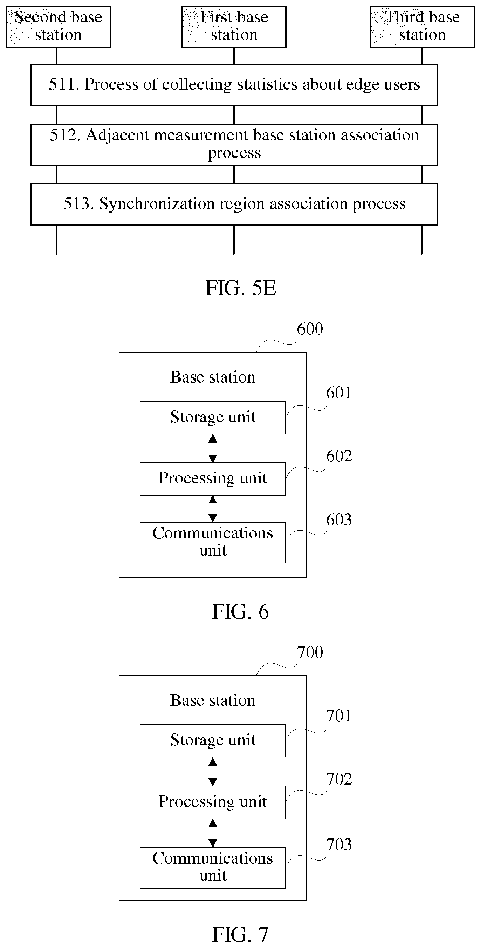

The following describes the foregoing base station association method with reference to FIG. 5E. FIG. 5E shows a base station association method according to an embodiment of the present invention. The second base station may be a reference base station, the first base station is a lower-level base station of the second base station, and a third base station is a lower-level base station of the second base station. It may be understood that, in this case, the first base station and the third base station are both non-reference base stations. The method includes a part 511 to a part 513.

In the part 511, a process of collecting statistics about edge users is performed.

In this part, the second base station, the first base station, and the third base station separately perform a process of collecting statistics about edge users. Using the second base station as an example for description, the second base station collects statistics about edge users between the second base station and a handover base station adjacent to the second base station. A time period for the statistics collection may last 24 hours or may be other duration. For example, the process of collecting statistics about edge users may be performed by collecting statistics about a quantity of reporting times of an intra-frequency event A3 of a terminal. It should be noted that the foregoing handover base station adjacent to the second base station includes the first base station.

Similarly, the first base station and the third base station may also separately perform the process of collecting statistics about edge users in the foregoing manner. Handover base stations adjacent to the first base station include the second base station and the third base station. A handover base station adjacent to the third base station includes the second base station.

In an example, a switch of an air interface soft synchronization function may be set in each of the second base station, the first base station, and the third base station. After the switch is enabled, the second base station, the first base station, and third base station may separately start to perform the process of collecting statistics about edge users.

In a part 512, an adjacent measurement base station association process is performed.

In this part, an adjacent measurement base station association process may be performed between the second base station and the first base station, or an adjacent measurement base station association process may further be performed between the first base station and the third base station. The following provides descriptions by using an example in which an adjacent measurement base station association process is performed between the second base station and the first base station.

In an example, after completing the process of collecting statistics about edge users, the second base station first sorts, based on a result of the process of collecting statistics about edge users, handover base stations adjacent to the second base station, and uses, as candidate adjacent measurement base stations, several handover base stations that rank high and for which a statistical result is greater than a threshold. The several handover base stations include the first base station. Subsequently, the second base station sends a first association request to each of the several handover base stations, where the first association request is used to associate the first base station and a handover base station with each other as adjacent measurement base stations. The first association request may be referred to as an adjacent measurement base station association request. For example, the first association request may be an X2 message.

Correspondingly, after receiving the first association request, the handover base station determines, based on a result of statistics collection about edge users by the handover base station, whether the second base station is a candidate adjacent measurement base station of the handover base station. If yes, the handover base station sends a first association response to the second base station. Otherwise, the handover base station sends an association failure response to the second base station. For example, after receiving the first association request, if the first base station determines that the second base station is a candidate measurement base station of the first base station, the first base station sends a first association response to the second base station.

It may be understood that, if the second base station receives first association responses of some or all base stations of the several handover base stations, it indicates that the second base station is separately associated with the some or all base stations as formal adjacent measurement base stations. For example, after the second base station receives the first association response of the first base station, the second base station and the first base station are associated with each other as formal adjacent measurement base stations.

Similarly, the first base station and the third base station may also separately perform the adjacent measurement base station association process in the foregoing manner.

In a part 513, a synchronization region association process is performed.

In this part, a reference base station may be specified according to a user configuration. For example, the second base station may be specified as the reference base station. After the reference base station is configured, the reference base station sends a second association request to all adjacent measurement base stations of the reference base station. The second association request is used to associate the reference base station and a measurement base station of the reference base station with a same synchronization region. The second association request may be referred to as a synchronization region association request. For example, the second association request may be an X2 message. For example, the second association request may include a synchronization region identifier (Identifier, ID) and a step from a current base station to the reference base station. The current base station is a base station that sends the second association request. For example, when the reference base station sends the second association request, the current base station is the reference base station, and the step from the current base station to the reference base station is 0.

After receiving the second association request, an adjacent measurement base station of the reference base station sends the second association request to a next-level measurement base station of the adjacent measurement base station of the reference base station. In this case, the current base station is the adjacent measurement base station of the reference base station, the step from the current base station to the reference base station is a received step plus 1. To be specific, the step from the current base station to the reference base station is 1. Similarly, the next-level measurement base station of the adjacent measurement base station of the reference base station may perform operations according to the foregoing process.

It should be noted that for a base station other than the reference base station, because there may be more than one reference base station in the network, the base station may receive one or more second association requests. When the base station receives one second association request, the base station sends a second association response to a reference base station corresponding to a synchronization region ID carried in the second association request. Alternatively, when the base station receives two or more second association requests, the base station selects a synchronization region identified by a synchronization region ID in a second association request carrying a step that is the smallest and that does not exceed a step threshold as a synchronization region of the base station, and sends a first association response to a reference base station corresponding to the synchronization region ID.

In an example, the second base station is a reference base station, the first base station is an adjacent lower-level measurement base station of the second base station, and the third base station is an adjacent lower-level measurement base station of the second base station. The second base station sends a second association request to the first base station. The request carries a synchronization region ID and a step (0). After receiving the request, the first base station sends a first association response to the second base station, and sends a second association request to the third base station. The request carries the synchronization region ID and a step (1). After receiving the request, the third base station sends a second association response to the second base station by using the first base station.

In the part 511 to the part 513, all the base stations in the network complete the synchronization region association process, and then these base stations may perform frequency synchronization and phase synchronization. For example, these base stations may implement the frequency synchronization or phase synchronization method described above, or may implement another frequency synchronization or phase synchronization method. This is not limited in this embodiment of the present invention.

It should be noted that the method shown in FIG. 5E is merely an example. The base station association method provided in this embodiment of the present invention may be implemented only by the second base station and the first base station, or may be jointly implemented by the second base station, the first base station, the third base station, and more base stations. This is not limited in this embodiment of the present invention.

The solutions provided in the embodiments of the present invention are described above from perspectives of interaction between different base stations and interaction between a base station and a terminal. It may be understood that to implement the foregoing functions, a non-reference base station, a reference base station, or a terminal includes corresponding hardware structures and/or software modules for implementing the functions.

Units and algorithm steps in examples described with reference to the embodiments disclosed in the present invention can be implemented by hardware or in a form combining hardware and computer software in the embodiments of the present invention. Whether a function is performed by hardware or by computer software driving hardware depends on a particular application and design restraint condition of the technical solutions. A person skilled in the art may implement the described functions by using a different method for each specific application. However, such implementation shall not be considered as falling outside the scope of technical solutions of the embodiments of the present invention.

In the embodiments of the present invention, functional unit division may be performed for the non-reference base station and the reference base station based on the foregoing method examples. For example, the functional unit division may be performed corresponding to the functions, or two or more functions may be integrated in one processing unit. The integrated unit may be implemented in a form of hardware, or may be implemented in a form of a software functional unit. It should be noted that unit division in this embodiment of the present invention is an example and is merely logical function division. During actual implementation, there may be another division manner.

When the integrated unit is used, FIG. 6 is a possible schematic block diagram of a base station according to the foregoing embodiment. The base station may be a first base station. The base station 600 includes a processing unit 602 and a communications unit 603. The processing unit 602 is configured to control and manage an action of the base station 600. For example, the processing unit 602 is configured to support the base station 600 in performing the process including 301 to 304 in FIG. 3, the method shown in FIG. 4, the functions implemented by the second-level base station, the third-level base station, the fourth-level base station, and the like in the methods shown in FIG. 5B to FIG. 5D, the process including 511 to 513 in FIG. 5E, and/or another process of the technology described in this specification. The communications unit 603 is configured to support communication between the base station 600 and another base station, communication between the base station 600 and a terminal, and communication between the base station 600 and a core network device. The base station 600 may further include a storage unit 601, configured to store program code and data of the base station 600.

When the integrated unit is used, FIG. 7 is a possible schematic block diagram of another base station according to the foregoing embodiment. The base station may be a second base station. The base station 700 includes a processing unit 702 and a communications unit 703. The processing unit 702 is configured to control and manage an action of the base station 700. For example, the processing unit 702 is configured to support the base station 700 in performing the functions implemented by the first-level base station in FIG. 5B to FIG. 5D, the process including 511 to 513 in FIG. 5E, and/or another process of the technology described in this specification. The communications unit 703 is configured to support communication between the base station 700 and another base station, communication between the base station 700 and a terminal, and communication between the base station 700 and a core network device. The base station 700 may further include a storage unit 701, configured to store program code and data of the base station 700.

The processing unit 602 and the processing unit 702 each may be a processor or a controller. The communications unit 603 and the communications unit 703 each may be a communications interface, a transceiver, a transceiver circuit, or the like. The communications interface is a general name. In a specific implementation, the communications interface may include a plurality of interfaces, for example, may include: an interface (for example, an X2 interface) between base stations, an interface (for example, an S1 interface) between a base station and a network device in a core network, and/or another interface. The storage unit 601 and the storage unit 701 each may be a memory.

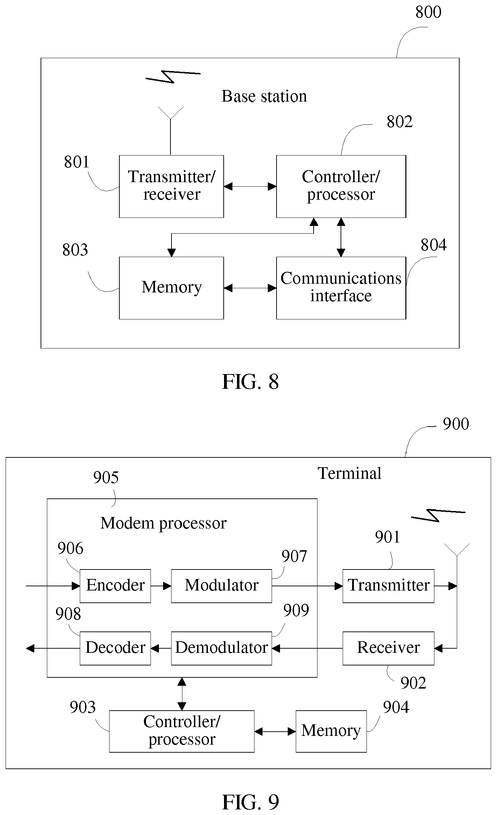

When the processing unit 602 is a processor, the communications unit 603 is a communications interface, and the storage unit 601 is a memory, a structure of a first base station described in this embodiment of the present invention may be a structure of a base station shown in FIG. 8. When the processing unit 702 is a processor, the communications unit 703 is a communications interface, and the storage unit 701 is a memory, a second base station described in this embodiment of the present invention may be in the structure of the base station shown in FIG. 8.

FIG. 8 is a possible schematic structural diagram of a base station according to an embodiment of the present invention.

The base station 800 includes a processor 802 and a communications interface 804. The processor 802 may also be a controller, represented as a "controller/processor 802" in FIG. 8. The communications interface 804 is configured to support communication between the base station and another base station, or may be configured to support communication between the base station and a device in a core network. Further, the base station 800 may further include a transmitter/receiver 801. The transmitter/receiver 801 is configured to: support information sending and receiving between the base station and the terminal in the foregoing embodiment, and support radio communication between the terminal and another terminal. The processor 802 performs various functions for communicating with the terminal. On an uplink, an uplink signal from the terminal is received by an antenna, is demodulated by the receiver 801 (for example, a high frequency signal is demodulated to a baseband signal), and is further processed by the processor 802, to restore service data and signaling message that are sent by the terminal. On a downlink, service data and a signaling message are processed by the processor 802, and are modulated by the transmitter 801 (for example, a baseband signal is modulated to a high frequency signal) to generate a downlink signal, and the downlink signal is transmitted to the terminal by using the antenna. It should be noted that the foregoing demodulation or modulation function may be alternatively performed by the processor 802.

For example, when the base station 800 is a first base station, the processor 802 is further configured to perform a processing process relating to the first base station in the methods shown in FIG. 3 to FIG. 5D and FIG. 5E and/or another process in the technical solutions described in this application. Alternatively, when the base station 800 is a second base station, the processor 802 is further configured to perform a processing process relating to the second base station in the methods shown in FIG. 3 to FIG. 5D and FIG. 5E and/or another process in the technical solutions described in this application.

Further, the base station 800 may further include a memory 803. The memory 803 is configured to store program code and data of the base station 800.

It may be understood that FIG. 8 shows merely a simplified design of the base station 800. In an actual application, the base station 800 may include any quantity of transmitters, receivers, processors, controllers, memories, communications units, and the like. Base stations that can implement this embodiment of the present invention all fall within a protection scope of this embodiment of the present invention.

FIG. 9 is a simplified schematic diagram of a possible design structure of a terminal according to an embodiment of the present invention. The terminal 900 includes a transmitter 901, a receiver 902, and a processor 903. The processor 903 may also be a controller, represented as a "controller/processor 903" in FIG. 9. Optionally, the terminal 900 may further include a modem processor 905. The modem processor 905 may include an encoder 906, a modulator 907, a decoder 908, and a demodulator 909.

In an example, the transmitter 901 adjusts (for example, performs analog conversion, filtering, amplification, and up-conversion on) the output sampling and generates an uplink signal. The uplink signal is transmitted to the base station in the foregoing embodiment by using an antenna. On a downlink, the antenna receives a downlink signal transmitted by the base station in the foregoing embodiments. The receiver 902 adjusts (for example, performs filtering, amplification, downconversion, and digitization on) a signal received by using the antenna and provides input sampling. In the modem processor 905, the encoder 909 receives service data and a signaling message that are to be sent on an uplink, and processes (for example, performs formatting, encoding, and interleaving on) the service data and the signaling message. The modulator 909 further processes (for example, performs symbol mapping and modulation on) the encoded service data and signaling message and provides output sampling. The demodulator 909 processes (for example, performs demodulation on) the input sampling and provides symbol estimation. The decoder 908 processes (for example, performs deinterleaving and decoding on) the symbol estimation and provides decoded data and signaling message to be sent to the terminal 900. The encoder 909, the modulator 909, the demodulator 909, and the decoder 908 may be implemented by the synthetic modem processor 905. These units perform processing based on a radio access technology (for example, access technologies in an LTE system and other evolved systems) used in a radio access network. It should be noted that, when the terminal 900 does not include the modem processor 905, the foregoing function of the modem processor 905 may be implemented by the processor 903.

The processor 903 controls and manages an action of the terminal 900, and is configured to perform the foregoing processing process performed by the terminal 900 in this embodiment of the present invention.

Further, the terminal 900 may further include a memory 904. The memory 904 is configured to store program code and data that are used for the terminal 900. The processor configured to execute functions of the base station or the terminal in the present invention may be a central processing unit (Central Processing Unit, CPU), a general objective processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware assembly, or any combination thereof. The processor can implement or perform various examples of logic blocks, modules, and circuits described with reference to content disclosed in the embodiments of the present invention. Alternatively, the processor may be a combination implementing a calculation function, for example, a combination including one or more microprocessors, or a combination of a DSP and a microprocessor.

The methods or algorithm steps described with reference to the content disclosed in the embodiments of the present invention may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other forms well-known in the art. A storage medium used as an example is coupled to the processor, so that the processor can read information from the storage medium, and can write information into the storage medium. Certainly, alternatively, the storage medium may be a part of the processor. The processor and the storage medium may be located in an ASIC. In addition, the ASIC may be located in the base station or the terminal. Certainly, the processor and the storage medium may exist in the base station or the terminal as discrete components.

A person of skill in the art should be aware that in one or more of the foregoing examples, the functions described in the embodiments of the present invention may be implemented by using hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer.

The objectives, technical solutions, and beneficial effects of the embodiments of the present invention are further described in detail in the foregoing specific embodiments. It should be understood that, the foregoing descriptions are only specific implementations of the embodiments of the present invention, but are not intended to limit the protection scope of the embodiments of the present invention.

## Claims

1. A frequency synchronization method, comprising:

   obtaining (301), by a first base station, a second frequency offset of a second base station; wherein the second base station is a higher-level base station or a same-level base station of the first base station;
   determining (302), by the first base station, a frequency difference between the first base station and the second base station;
   determining (303), by the first base station, a first frequency offset of the first base station based on the second frequency offset and the frequency difference, wherein the first frequency offset and the second frequency offset are offsets with respect to a frequency of a reference base station; and
   performing (304), by the first base station, frequency synchronization based on the first frequency offset;
   wherein the determining (302), by the first base station, a frequency difference between the first base station and the second base station comprises:

obtaining, by the first base station within a measurement period, at least two phase difference measurement values between the first base station and the second base station; and

determining, by the first base station, the frequency difference between the first base station and the second base station based on the at least two phase difference measurement values;

wherein the obtaining, by the first base station within a measurement period, at least two phase difference measurement values between the first base station and the second base station comprises:

receiving, by the first base station, at least two signals sent by a terminal, recording, by the first base station, for each of the at least two signals a moment at which the signal is received, obtaining, by the first base station, for each of the at least two signals a moment at which the second base station receives the signal and determining the phase difference measurement value from the moment at which the second base station receives the signal and the moment at which the first base station receives the signal; and

wherein the determining, by the first base station, the frequency difference between the first base station and the second base station based on the at least two phase difference measurement values comprises:

obtaining, through fitting and based on the at least two phase difference measurement values and corresponding measurement moments, a linear function of the phase difference between the first base station and the second base station to determine the frequency difference between the first base station and the second base station.

2. The method according to claim 1, wherein when the second base station is a same-level base station of the first base station, the method further comprises: sending, by the first base station, the first frequency offset to the second base station.

3. The method according to any one of claims 1 or 2, further comprising:

obtaining, by the first base station, a second phase offset of the second base station;

determining, by the first base station, a phase difference between the first base station and the second base station;

determining, by the first base station, a first phase offset of the first base station based on the second phase offset and the phase difference; and

performing, by the first base station, phase synchronization based on the first phase offset;

wherein the first phase offset and the second phase offset are offsets with respect to a phase of a reference base station.

4. The method according to claim 1 or 2, wherein before the obtaining, by a first base station, a second frequency offset of a second base station, the method further comprises:

receiving, by the first base station, an association request from the second base station; and

sending, by the first base station, an association response to the second base station.

5. A frequency synchronization method, comprising:

performing, by a second base station, frequency synchronization; and

sending, by the second base station, a second frequency offset of the second base station to a first base station, so that the first base station determines a first frequency offset of the first base station, wherein the first frequency offset is used by the first base station to perform frequency synchronization, wherein the first frequency offset and the second frequency offset are offsets with respect to a frequency of a reference base station;

wherein the performing, by a second base station, frequency synchronization further comprises:

receiving, by the second base station, at least two signals sent by a terminal, recording, by the second base station, for each of the at least two signals a moment at which the signal is received, and sending, by the second base station, for each of the at least two signals the moment at which the second base station receives the signal to the first base station.

6. The method according to claim 5, further comprising:

sending, by the second base station, a second phase offset of the second base station to the first base station, so that the first base station determines a first phase offset of the first base station, wherein the first phase offset is used by the first base station to perform phase synchronization;

wherein the first phase offset and the second phase offset are offsets with respect to a phase of a reference base station.

7. The method according to claim 5 or 6, wherein before the performing, by a second base station, frequency synchronization, the method further comprises:

sending, by the second base station, an association request to the first base station; and receiving, by the second base station, an association response from the first base station.

8. A base station, wherein the base station is a first base station, and comprises a processing unit (602) and a communications unit (603), wherein the processing unit (602) is configured to: obtain a second frequency offset of a second base station by using the communications unit (603); wherein the second base station is a higher-level base station or a same-level base station of the first base station; determine a frequency difference between the first base station and the second base station; determine a first frequency offset of the first base station based on the second frequency offset and the frequency difference; and perform frequency synchronization based on the first frequency offset, wherein the first frequency offset and the second frequency offset are offsets with respect to a frequency of a reference base station;

wherein the processing unit (602) is specifically configured to: obtain, within a measurement period, at least two phase difference measurement values between the first base station and the second base station by using the communications unit; and determine the frequency difference between the first base station and the second base station based on the at least two phase difference measurement values;

wherein the obtaining within a measurement period, at least two phase difference measurement values between the first base station and the second base station comprises:

receiving at least two signals sent by a terminal, recording for each of the at least two signals a moment at which the signal is received, obtaining for each of the at least two signals a moment at which the second base station receives the signal and determining the phase difference measurement value from the moment at which the second base station receives the signal and the moment at which the first base station receives the signal; and wherein the determining the frequency difference between the first base station and the second base station based on the at least two phase difference measurement values comprises: obtaining, through fitting and based on the at least two phase difference measurement values and corresponding measurement moments, a linear function of the phase difference between the first base station and the second base station to determine the frequency difference between the first base station and the second base station.

9. The base station according to claim 8, wherein the processing unit (602) is further configured to: when the second base station is a same-level base station of the first base station, send the first frequency offset to the second base station by using the communications unit (603).

10. The base station according to any one of claims 8 or 9, wherein the processing unit (602) is further configured to: obtain a second phase offset of the second base station by using the communications unit (602); determine a phase difference between the first base station and the second base station; determine a first phase offset of the first base station based on the second phase offset and the phase difference; and perform phase synchronization based on the first phase offset;

wherein the first phase offset and the second phase offset are offsets with respect to a phase of a reference base station.

11. The base station according to claim 8 or 9, wherein the processing unit is further configured to: before obtaining the second frequency offset of the second base station by using the communications unit (602), receive an association request from the second base station by using the communications unit (602); and send an association response to the second base station by using the communications unit (602).

12. A base station, wherein the base station is a second base station, and comprises a processing unit (702) and a communications unit (703), wherein the processing unit (702) is configured to: perform frequency synchronization; and send a second frequency offset of the second base station to a first base station by using the communications unit (703), so that the first base station determines a first frequency offset of the first base station, wherein the first frequency offset is used by the first base station to perform frequency synchronization, wherein the first frequency offset and the second frequency offset are offsets with respect to a frequency of a reference base station;

wherein the performing frequency synchronization further comprises:

receiving, by the second base station, at least two signals sent by a terminal,
recording, by the second base station, for each of the at least two signals a moment at which the signal is received, and
sending, by the second base station, for each of the at least two signals the moment at which the second base station receives the signal to the first base station.

13. The base station according to claim 12, wherein the processing unit (702) is further configured to: before performing frequency synchronization, send an association request to the first base station by using the communications unit (703); and receive an association response from the first base station by using the communications unit (703).


**Patentansprüche**

1. Frequenzsynchronisierungsverfahren, Folgendes umfassend:

Erhalten (301), durch eine erste Basisstation, eines zweiten Frequenzversatzes einer zweiten Basisstation; wobei die zweite Basisstation eine Basisstation höherer Ebene oder eine Basisstation der gleichen Ebene wie die erste Basisstation ist;
Bestimmen (302), durch die erste Basisstation, einer Frequenzdifferenz zwischen der ersten Basisstation und der zweiten Basisstation;
Bestimmen (303), durch die erste Basisstation, eines ersten Frequenzversatzes der ersten Basisstation basierend auf dem zweiten Frequenzversatz und der Frequenzdifferenz, wobei der erste Frequenzversatz und der zweite Frequenzversatz Versätze in Bezug auf eine Frequenz einer Referenzbasisstation sind; und
Durchführen (304), durch die erste Basisstation, einer Frequenzsynchronisierung basierend auf dem ersten Frequenzversatz;
wobei das Bestimmen (302), durch die erste Basisstation, einer Frequenzdifferenz zwischen der ersten Basisstation und der zweiten Basisstation Folgendes umfasst:

Erhalten, durch die erste Basisstation innerhalb einer Messperiode, von mindestens zwei Phasendifferenz-Messwerten zwischen der ersten Basisstation und der zweiten Basisstation; und
Bestimmen, durch die erste Basisstation, der Frequenzdifferenz zwischen der ersten Basisstation und der zweiten Basisstation, basierend auf den mindestens zwei Phasendifferenz-Messwerten;
wobei das Erhalten, durch die erste Basisstation innerhalb einer Messperiode, mindestens zweier Phasendifferenz-Messwerte zwischen der ersten Basisstation und der zweiten Basisstation Folgendes umfasst:

Empfangen, durch die erste Basisstation, von mindestens zwei von einem Endgerät gesendeten Signalen,
Aufzeichnen, durch die erste Basisstation, für jedes der mindestens zwei Signale eines Zeitpunkts, zu dem das Signal empfangen wird,
Erhalten, durch die erste Basisstation, für jedes der mindestens zwei Signale eines Zeitpunkts, zu dem die zweite Basisstation das Signal empfängt, und
Bestimmen des Phasendifferenz-Messwerts ab dem Zeitpunkt, zu dem die zweite Basisstation das Signal empfängt, und dem Zeitpunkt, zu dem die erste Basisstation das Signal empfängt; und
wobei das Bestimmen, durch die erste Basisstation, der Frequenzdifferenz zwischen der ersten Basisstation und der zweiten Basisstation, basierend auf den mindestens zwei Phasendifferenz-Messwerten Folgendes umfasst:
Erhalten, durch Anpassen und basierend auf den mindestens zwei Phasendifferenz-Messwerten und entsprechenden Messzeitpunkten, einer linearen Funktion der Phasendifferenz zwischen der ersten Basisstation und der zweiten Basisstation, um die Frequenzdifferenz zwischen der ersten Basisstation und der zweiten Basisstation zu bestimmen.

2. Verfahren nach Anspruch 1, wobei, wenn die zweite Basisstation eine Basisstation der gleichen Ebene wie die erste Basisstation ist, das Verfahren ferner Folgendes umfasst: Senden, durch die erste Basisstation, des ersten Frequenzversatzes an die zweite Basisstation.

3. Verfahren nach einem der Ansprüche 1 oder 2, ferner Folgendes umfassend:

Erhalten, durch die erste Basisstation, eines zweiten Phasenversatzes der zweiten Basisstation;
Bestimmen, durch die erste Basisstation, einer Phasendifferenz zwischen der ersten Basisstation und der zweiten Basisstation;
Bestimmen, durch die erste Basisstation, eines ersten Phasenversatzes der ersten Basisstation basierend auf dem zweiten Phasenversatz und der Phasendifferenz; und
Durchführen, durch die erste Basisstation, einer Phasensynchronisierung basierend auf dem ersten Phasenversatz;
wobei der erste Phasenversatz und der zweite Phasenversatz Versätze in Bezug auf eine Phase einer Referenzbasisstation sind.

4. Verfahren nach Anspruch 1 oder 2, wobei, vor dem Erhalten, durch eine erste Basisstation, eines zweiten Frequenzversatzes einer zweiten Basisstation, das Verfahren ferner Folgendes umfasst:
Empfangen, durch die erste Basisstation, einer Assoziationsanforderung von der zweiten Basisstation; und Senden, durch die erste Basisstation, einer Assoziationsantwort an die zweite Basisstation.

5. Frequenzsynchronisierungsverfahren, umfassend:

Durchführen, durch eine zweite Basisstation, einer Frequenzsynchronisierung; und
Senden, durch die zweite Basisstation, eines zweiten Frequenzversatzes der zweiten Basisstation an eine erste Basisstation, so dass die erste Basisstation einen ersten Frequenzversatz der ersten Basisstation bestimmt, wobei der erste Frequenzversatz von der ersten Basisstation verwendet wird, um eine Frequenzsynchronisierung durchzuführen, wobei der erste Frequenzversatz und der zweite Frequenzversatz Versätze in Bezug auf eine Frequenz einer Referenzbasisstation sind;
wobei das Durchführen, durch eine zweite Basisstation, einer Frequenzsynchronisierung ferner Folgendes umfasst:

Empfangen, durch die zweite Basisstation, von mindestens zwei von einem Endgerät gesendeten Signalen,
Aufzeichnen, durch die zweite Basisstation, für jedes der mindestens zwei Signale eines Zeitpunkts, zu dem das Signal empfangen wird, und
Senden, durch die zweite Basisstation, für jedes der mindestens zwei Signale, des Zeitpunkts, zu dem die zweite Basisstation das Signal empfängt, an die erste Basisstation.

6. Verfahren nach Anspruch 5, ferner Folgendes umfassend:

Senden, durch die zweite Basisstation, eines zweiten Phasenversatzes der zweiten Basisstation an die erste Basisstation, so dass die erste Basisstation einen ersten Phasenversatz der ersten Basisstation bestimmt, wobei der erste Phasenversatz von der ersten Basisstation verwendet wird, um eine Phasensynchronisierung durchzuführen;
wobei der erste Phasenversatz und der zweite Phasenversatz Versätze in Bezug auf eine Phase einer Referenzbasisstation sind.

7. Verfahren nach Anspruch 5 oder 6, wobei, vor dem Durchführen, durch eine zweite Basisstation, einer Frequenzsynchronisierung, das Verfahren ferner umfasst:

Senden, durch die zweite Basisstation, einer Assoziationsanforderung an die erste Basisstation; und
Empfangen, durch die zweite Basisstation, einer Assoziationsantwort von der ersten Basisstation.

8. Basisstation, wobei die Basisstation eine erste Basisstation ist und eine Verarbeitungseinheit (602) und eine Kommunikationseinheit (603) umfasst, wobei die Verarbeitungseinheit (602) dazu konfiguriert ist: einen zweiten Frequenzversatz einer zweiten Basisstation unter Verwendung der Kommunikationseinheit (603) zu erhalten; wobei die zweite Basisstation eine Basisstation höherer Ebene oder eine Basisstation der gleichen Ebene wie die erste Basisstation ist; eine Frequenzdifferenz zwischen der ersten Basisstation und der zweiten Basisstation zu bestimmen; einen ersten Frequenzversatz der ersten Basisstation basierend auf dem zweiten Frequenzversatz und der Frequenzdifferenz zu bestimmen; und eine Frequenzsynchronisierung basierend auf dem ersten Frequenzversatz durchzuführen, wobei der erste Frequenzversatz und der zweite Frequenzversatz Versätze in Bezug auf eine Frequenz einer Referenzbasisstation sind;
wobei die Verarbeitungseinheit (602) insbesondere dazu konfiguriert ist: innerhalb einer Messperiode mindestens zwei Phasendifferenz-Messwerte zwischen der ersten Basisstation und der zweiten Basisstation unter Verwendung der Kommunikationseinheit zu erhalten; und die Frequenzdifferenz zwischen der ersten Basisstation und der zweiten Basisstation basierend auf den mindestens zwei Phasendifferenz-Messwerten zu bestimmen;
wobei das Erhalten innerhalb einer Messperiode, mindestens zweier Phasendifferenz-Messwerte zwischen der ersten Basisstation und der zweiten Basisstation Folgendes umfasst:

Empfangen von mindestens zwei von einem Endgerät gesendeten Signalen,
Aufzeichnen für jedes der mindestens zwei Signale eines Zeitpunkts, zu dem das Signal empfangen wird,
Erhalten für jedes der mindestens zwei Signale eines Zeitpunkts, zu dem die zweite Basisstation das Signal empfängt, und Bestimmen des Phasendifferenz-Messwerts ab dem Zeitpunkt, zu dem die zweite Basisstation das Signal empfängt, und dem Zeitpunkt, zu dem die erste Basisstation das Signal empfängt; und
wobei das Bestimmen der Frequenzdifferenz zwischen der ersten Basisstation und der zweiten Basisstation, basierend auf den mindestens zwei Phasendifferenz-Messwerten Folgendes umfasst:
Erhalten, durch Anpassen und basierend auf den mindestens zwei Phasendifferenz-Messwerten und entsprechenden Messzeitpunkten, einer linearen Funktion der Phasendifferenz zwischen der ersten Basisstation und der zweiten Basisstation, um die Frequenzdifferenz zwischen der ersten Basisstation und der zweiten Basisstation zu bestimmen.

9. Basisstation nach Anspruch 8, wobei die Verarbeitungseinheit (602) ferner dazu konfiguriert ist, wenn die zweite Basisstation eine Basisstation der gleichen Ebene wie die erste Basisstation ist, den ersten Frequenzversatz unter Verwendung der Kommunikationseinheit (603) an die zweite Basisstation zu senden.

10. Basisstation nach einem der Ansprüche 8 oder 9, wobei die Verarbeitungseinheit (602) ferner dazu konfiguriert ist: einen zweiten Phasenversatz der zweiten Basisstation unter Verwendung der Kommunikationseinheit (602) zu erhalten; eine Phasendifferenz zwischen der ersten Basisstation und der zweiten Basisstation zu bestimmen; einen ersten Phasenversatz der ersten Basisstation basierend auf dem zweiten Phasenversatz und der Phasendifferenz zu bestimmen; und eine Phasensynchronisierung basierend auf dem ersten Phasenversatz durchzuführen; wobei der erste Phasenversatz und der zweite Phasenversatz Versätze in Bezug auf eine Phase einer Referenzbasisstation sind.

11. Basisstation nach Anspruch 8 oder 9, wobei die Verarbeitungseinheit ferner dazu konfiguriert ist: vor dem Erhalten des zweiten Frequenzversatzes der zweiten Basisstation unter Verwendung der Kommunikationseinheit (602), eine Assoziationsanforderung von der zweiten Basisstation unter Verwendung der Kommunikationseinheit (602) zu empfangen; und eine Assoziationsantwort an die zweite Basisstation unter Verwendung der Kommunikationseinheit (602) zu senden.

12. Basisstation, wobei die Basisstation eine zweite Basisstation ist und eine Verarbeitungseinheit (702) und eine Kommunikationseinheit (703) umfasst, wobei die Verarbeitungseinheit (702) dazu konfiguriert ist: eine Frequenzsynchronisierung durchzuführen; und einen zweiten Frequenzversatz der zweiten Basisstation an eine erste Basisstation unter Verwendung der Kommunikationseinheit (703) zu senden, so dass die erste Basisstation einen ersten Frequenzversatz der ersten Basisstation bestimmt, wobei der erste Frequenzversatz von der ersten Basisstation verwendet wird, um eine Frequenzsynchronisierung durchzuführen, wobei der erste Frequenzversatz und der zweite Frequenzversatz Versätze in Bezug auf eine Frequenz einer Referenzbasisstation sind;
wobei die durchführende Frequenzsynchronisierung ferner umfasst:

Empfangen, durch die zweite Basisstation, von mindestens zwei von einem Endgerät gesendeten Signalen,
Aufzeichnen, durch die zweite Basisstation, für jedes der mindestens zwei Signale eines Zeitpunkts, zu dem das Signal empfangen wird, und Senden, durch die zweite Basisstation, für jedes der mindestens zwei Signale, des Zeitpunkts, zu dem die zweite Basisstation das Signal empfängt, an die erste Basisstation.

13. Basisstation nach Anspruch 12, wobei die Verarbeitungseinheit (702) ferner dazu konfiguriert ist: vor dem Durchführen einer Frequenzsynchronisierung eine Assoziationsanforderung an die erste Basisstation unter Verwendung der Kommunikationseinheit (703) zu senden; und eine Assoziationsantwort von der ersten Basisstation unter Verwendung der Kommunikationseinheit (703) zu empfangen.

**Revendications**

1. Procédé de synchronisation de fréquence, comprenant les étapes consistant à :

obtenir (301), par une première station de base, un second décalage de fréquence d'une seconde station de base ; la seconde station de base étant une station de base d'un niveau supérieur ou d'un niveau similaire à celui de la première station de base ;
déterminer (302), par la première station de base, une différence de fréquence entre la première station de base et la seconde station de base ;
déterminer (303), par la première station de base, un premier décalage de fréquence de la première station de base sur la base du second décalage de fréquence et de la différence de fréquence, le premier décalage de fréquence et le second décalage de fréquence étant des décalages par rapport à une fréquence d'une station de base de référence ; et

réaliser (304), par la première station de base, une synchronisation de fréquence sur la base du premier décalage de fréquence ;

la détermination (302), par la première station de base, d'une différence de fréquence entre la première station de base et la seconde station de base comprenant les étapes consistant à :

obtenir, par la première station de base pendant une période de mesure, au moins deux valeurs de mesure de différence de phase entre la première station de base et la seconde station de base ; et

déterminer, par la première station de base, la différence de fréquence entre la première station de base et la seconde station de base sur la base des au moins deux valeurs de mesure de différence de phase ;

l'obtention, par la première station de base pendant une période de mesure, d'au moins deux valeurs de mesure de différence de phase entre la première station de base et la seconde station de base comprenant les étapes consistant à :

recevoir, par la première station de base, au moins deux signaux envoyés par un terminal,

enregistrer, par la première station de base, pour chacun des au moins deux signaux, un moment où le signal est reçu,

obtenir, par la première station de base, pour chacun des au moins deux signaux, un moment où la seconde station de base reçoit le signal et déterminer la valeur de mesure de différence de phase à partir du moment où la seconde station de base reçoit le signal et le moment où la première station de base reçoit le signal ; et

la détermination, par la première station de base, de la différence de fréquence entre la première station de base et la seconde station de base sur la base des au moins deux valeurs de mesure de différence de phase comprenant l'étape consistant à :

obtenir, par l'intermédiaire d'un ajustement et sur la base des au moins deux valeurs de mesure de différence de phase et de moments de mesure correspondants, une fonction linéaire de la différence de phase entre la première station de base et la seconde station de base afin de déterminer la différence de fréquence entre la première station de base et la seconde station de base.

**2.** Procédé selon la revendication 1, le procédé comprenant en outre, quand la seconde station de base est une station de base d'un niveau similaire à celui de la première station de base, l'étape consistant à : envoyer, par la première station de base, le premier décalage de fréquence à la seconde station de base.

**3.** Procédé selon l'une quelconque des revendications 1 et 2, consistant en outre à :

obtenir, par la première station de base, un second décalage de phase de la seconde station de base ;

déterminer, par la première station de base, une différence de phase entre la première station de base et la seconde station de base ;

déterminer, par la première station de base, un premier décalage de phase de la première station de base sur la base du second décalage de phase et de la différence de phase ; et

réaliser, par la première station de base, une synchronisation de phase sur la base du premier décalage de phase ;

le premier décalage de phase et le second décalage de phase étant des décalages par rapport à une phase d'une station de base de référence.

**4.** Procédé selon la revendication 1 ou 2, le procédé comprenant en outre, avant l'obtention, par une première station de base, d'un second décalage de fréquence d'une seconde station de base, les étapes consistant à :

recevoir, par la première station de base, une demande d'association en provenance de la seconde station de base ; et

envoyer, par la première station de base, une réponse d'association à la seconde station de base.

**5.** Procédé de synchronisation de fréquence, comprenant les étapes consistant à :

réaliser, par une seconde station de base, une synchronisation de fréquence ; et

envoyer, par la seconde station de base, un second décalage de fréquence de la seconde station de base à une première station de base, de sorte que la première station de base détermine un premier décalage de fréquence de la première station de base, le premier décalage de fréquence étant utilisé par la première station de base pour réaliser une synchronisation de fréquence, le premier décalage de fréquence et le second décalage de fréquence étant des décalages par rapport à une fréquence d'une station de base de référence ;

la réalisation, par une seconde station de base, d'une synchronisation de fréquence comprenant en outre les étapes consistant à :

recevoir, par la seconde station de base, au moins deux signaux envoyés par un terminal,

enregistrer, par la seconde station de base, pour chacun des au moins deux signaux, un moment où le signal est reçu, et

envoyer, par la seconde station de base, pour chacun des au moins deux signaux, le moment où la seconde station de base reçoit le signal à la première station de base.

6. Procédé selon la revendication 5, comprenant en outre les étapes consistant à :

envoyer, par la seconde station de base, un second décalage de phase de la seconde station de base à la première station de base, de sorte que la première station de base détermine un premier décalage de phase de la première station de base, le premier décalage de phase étant utilisé par la première station de base pour réaliser une synchronisation de phase ;

le premier décalage de phase et le second décalage de phase étant des décalages par rapport à une phase d'une station de base de référence.

7. Procédé selon la revendication 5 ou 6, le procédé comprenant en outre, avant la réalisation, par une seconde station de base, d'une synchronisation de fréquence, les étapes consistant à :

envoyer, par la seconde station de base, une demande d'association à la première station de base ; et

recevoir, par la seconde station de base, une réponse d'association en provenance de la première station de base.

8. Station de base, la station de base étant une première station de base et comprenant une unité de traitement (602) et une unité de communication (603),

l'unité de traitement (602) étant configurée pour : obtenir un second décalage de fréquence d'une seconde station de base au moyen de l'unité de communication (603) ; la seconde station de base étant une station de base d'un niveau supérieur ou d'un niveau similaire à celui de la première station de base ; déterminer une différence de fréquence entre la première station de base et la seconde station de base ; déterminer un premier décalage de fréquence de la première station de base sur la base du second décalage de fréquence et de la différence de fréquence ; et réaliser une synchronisation de fréquence sur la base du premier décalage de fréquence, le premier décalage de fréquence et le second décalage de fréquence étant des décalages par rapport à une fréquence d'une station de base de référence ;

l'unité de traitement (602) étant spécifiquement configurée pour : obtenir, pendant une période de mesure, au moins deux valeurs de mesure de différence de phase entre la première station de base et la seconde station de base au moyen de l'unité de communication ; et déterminer la différence de fréquence entre la première station de base et la seconde station de base sur la base des au moins deux valeurs de mesure de différence de phase ;

l'obtention, pendant une période de mesure, d'au moins deux valeurs de mesure de différence de phase entre la première station de base et la seconde station de base comprenant les étapes consistant à :

recevoir au moins deux signaux envoyés par un terminal,

enregistrer, pour chacun des au moins deux signaux, un moment où le signal est reçu, obtenir, pour chacun des au moins deux signaux, un moment où la seconde station de base reçoit le signal et déterminer la valeur de mesure de différence de phase à partir du moment où la seconde station de base reçoit le signal et le moment où la première station de base reçoit le signal ; et

la détermination de la différence de fréquence entre la première station de base et la seconde station de base sur la base des au moins deux valeurs de mesure de différence de phase comprenant l'étape consistant à :

obtenir, par l'intermédiaire d'un ajustement et sur la base des au moins deux valeurs de mesure de différence de phase et de moments de mesure correspondants, une fonction linéaire de la différence de phase entre la première station de base et la seconde station de base afin de déterminer la différence de fréquence entre la première station de base et la seconde station de base.

9. Station de base selon la revendication 8, dans laquelle l'unité de traitement (602) est en outre configurée pour : quand la seconde station de base est une station de base d'un niveau similaire à celui de la première station de base, envoyer le premier décalage de fréquence à la seconde station de base au moyen de l'unité de communication (603).

**10.** Station de base selon l'une quelconque des revendications 8 et 9, dans laquelle l'unité de traitement (602) est en outre configurée pour : obtenir un second décalage de phase de la seconde station de base au moyen de l'unité de communication (602) ; déterminer une différence de phase entre la première station de base et la seconde station de base ; déterminer un premier décalage de phase de la première station de base sur la base du second décalage de phase et de la différence de phase ; et réaliser une synchronisation de phase sur la base du premier décalage de phase ; le premier décalage de phase et le second décalage de phase étant des décalages par rapport à une phase d'une station de base de référence.

**11.** Station de base selon la revendication 8 ou 9, dans laquelle l'unité de traitement est en outre configurée pour : avant l'obtention du second décalage de fréquence de la seconde station de base au moyen de l'unité de communication (602), recevoir une demande d'association en provenance de la seconde station de base au moyen de l'unité de communication (602) ; et envoyer une réponse d'association à la seconde station de base au moyen de l'unité de communication (602).

**12.** Station de base, la station de base étant une seconde station de base et comprenant une unité de traitement (702) et une unité de communication (703), l'unité de traitement (702) étant configurée pour : réaliser une synchronisation de fréquence ; et envoyer un second décalage de fréquence de la seconde station de base à une première station de base au moyen de l'unité de communication (703), de sorte que la première station de base détermine un premier décalage de fréquence de la première station de base, le premier décalage de fréquence étant utilisé par la première station de base pour réaliser une synchronisation de fréquence, le premier décalage de fréquence et le second décalage de fréquence étant des décalages par rapport à une fréquence d'une station de base de référence ; la réalisation d'une synchronisation de fréquence comprenant en outre les étapes consistant à :

recevoir, par la seconde station de base, au moins deux signaux envoyés par un terminal, enregistrer, par la seconde station de base, pour chacun des au moins deux signaux, un moment où le signal est reçu, et envoyer, par la seconde station de base, pour chacun des au moins deux signaux, le moment où la seconde station de base reçoit le signal à la première station de base.

**13.** Station de base selon la revendication 12, dans laquelle l'unité de traitement (702) est en outre configurée pour : avant la réalisation d'une synchronisation de fréquence, envoyer une demande d'association à la première station de base au moyen de l'unité de communication (703) ; et recevoir une réponse d'association en provenance de la première station de base au moyen de l'unité de communication (703).

FIG. 1A

FIG. 1B

FIG. 2

Obtain a second frequency offset of a second base station  301

Determine a frequency difference between a first base station and the second base station  302

Determine a first frequency offset of the first base station  303

Perform frequency synchronization  304

FIG. 3

Linear function $\Delta\phi = kt + b$ of a phase difference changing with time

FIG. 4

FIG. 5A

FIG. 5B

FIG. 5C

FIG. 5D

| Second base station | First base station | Third base station |
|---|---|---|

511. Process of collecting statistics about edge users

512. Adjacent measurement base station association process

513. Synchronization region association process

FIG. 5E

600

Base station

Storage unit — 601

Processing unit — 602

Communications unit — 603

FIG. 6

700

Base station

Storage unit — 701

Processing unit — 702

Communications unit — 703

FIG. 7

800

Base station

801

Transmitter/
receiver

802

Controller/
processor

803

Memory

804

Communications
interface

FIG. 8

900

Terminal

905

Modem processor

906

Encoder

907

Modulator

901

Transmitter

908

Decoder

909

Demodulator

902

Receiver

903

Controller/
processor

904

Memory

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010091590 A1

### Non-patent literature cited in the description

- Network listening based synchronization techniques for femtocell systems. *IEEE 22ND INTERNATIONAL SYMPOSIUM ON PERSONAL INDOOR AND MOBILE RADIO COMMUNICATIONS (PIMRC),* 09 November 2011